# EUROPÄISCHE PATENTSCHRIFT

(11) **EP 3 645 780 B1**
(45) Veröffentlichungstag und Bekanntmachung des Hinweises auf die Patenterteilung: **06.08.2025**
(21) Anmeldenummer: 18729970.6
(22) Anmeldetag: 08.06.2018
(51) Int. Cl.: D06F 34/32, G09F 23/00, G02F 1/1335, D06F 101/00, D06F 103/16, D06F 103/24, D06F 103/38, D06F 103/40, D06F 105/58

(54) **WÄSCHEPFLEGEGERÄT MIT EINEM ANZEIGEELEMENT**
LAUNDRY CARE APPLIANCE COMPRISING A DISPLAY ELEMENT
APPAREIL D'ENTRETIEN DU LINGE POURVU D'UN ÉLÉMENT D'AFFICHAGE

(30) Priorität: 29.06.2017 DE 102017211059
(43) Veröffentlichungstag der Anmeldung: 06.05.2020
(73) Patentinhaber: BSH Hausgeräte GmbH, 81739 München (DE)
(72) Erfinder: BLASADITSCH, Gregor, 83080 Oberaudorf (DE); FUCHS, Constanze, 10439 Berlin (DE); GRAEBSCH, Martin, 10587 Berlin (DE); KOBL, Bernhard, 93051 Regensburg (DE); LINNER, Anne, 10439 Berlin (DE); SCHLASS, Alexander, 14624 Dallgow-Döberitz (DE)
(86) Internationale Anmeldenummer: PCT/EP2018/065191
(87) Internationale Veröffentlichungsnummer: WO 2019/001933

(56) Entgegenhaltungen:
- EP-A1- 0 929 838
- EP-A1- 1 793 265
- EP-A1- 2 455 527
- EP-A1- 2 479 739
- WO-A1-2016/050799
- JP-A- 2002 328 374
- JP-A- 2012 138 056
- US-A- 5 694 793
- US-A1- 2013 290 902

## Beschreibung

Die vorliegende Erfindung betrifft ein Wäschepflegegerät mit einem Anzeigeelement.

Um Informationen über einen Wäschepflegevorgang eines Wäschepflegegeräts für den Nutzer des Wäschepflegegeräts anzuzeigen, können herkömmliche Wäschepflegegeräte ein Anzeigeelement, z.B. ein TFT-Display, aufweisen. Hierbei verwendete TFT-Displays können zwar eine Vielzahl von Informationen für den Nutzer bereitstellen, benötigen jedoch eine umfangreiche Prozessorleistung, um die Informationen vorteilhaft graphisch darstellen zu können. Dadurch kann sich der Aufwand für die Montage des Anzeigeelements und dadurch die Herstellungskosten des Wäschepflegegeräts erhöhen.

In der DE 101 17 292 A1 ist ein Display in einem Bedienfeld einer Waschmaschine offenbart, wobei das Display ausgebildet ist, alle Informationen im Klartext auszugeben.

In der EP 1 793 265 A1 ist ein LCD (liquid crystal display) Modul beschrieben, das in einer tragbaren Vorrichtung verwendet wird, wobei die tragbare Vorrichtung eine dünne Gehäusestärke (0,076mm) aufweist. Diese tragbaren Vorrichtungen sind Armbanduhren, PDAs (personal digital assistants), sowie mobile Endgeräte, wobei Telefone mit umfasst sind. Weiterhin ist beschrieben, dass das LCD Modul in Touch-Panel, in E-Paper, in bordeigenen Anzeigemodulen in Automobilen und in sogenannten IC-cards (wiederaufladbare Karten zum Bezahlen beispielsweise in öffentlichen Transportsystemen) verwendet wird.

In der EP 2 479 739 A1 isteine Displayeinheit (10) beschrieben, die ein numerisches Display (12) aufweist, das eine Vielzahl von individuell arbeitenden Displaysegmenten (20, 22, 24, 26, 28, 30) und mindestens eine permanent sichtbare Anzeigemarkierung/Indikatoren (14, 16, 18), die in der Nähe des unterteilten numerischen Displays ist. Die permanent sichtbaren Anzeigemarkierungen werden durch Beleuchten sichtbar gemacht.

In der US 5,694,793 ist eine eine Steuerungseinheit offenbart, die eine Displayeinheit aufweist, wobei die Displayeinheit mehrere Bildschirmeinheiten aufweist.

Es ist die der Erfindung zugrundeliegende Aufgabe, ein Wäschepflegegerät mit einem Anzeigeelement bereitzustellen, welches ein vorteilhaftes Anzeigen von Informationen für den Nutzer des Wäschepflegegeräts ermöglicht.

Diese Aufgabe wird durch Gegenstände mit den Merkmalen nach dem unabhängigen Anspruch gelöst. Vorteilhafte Ausführungsformen der Erfindung sind Gegenstand der Figuren, der Beschreibung und der abhängigen Ansprüche.

Gemäß einem Aspekt der Erfindung wird die Aufgabe durch ein Wäschepflegegerät mit einem Anzeigeelement zum Anzeigen von Leuchtsymbolen, und einer Steuerung zum Steuern des Anzeigeelements gelöst, wobei das Anzeigeelement eine Flüssigkeitskristall-Anzeige aufweist, welche eine Mehrzahl von einzeln ansteuerbaren Leuchtflächen aufweist, wobei das Anzeigeelement eine lichthemmende Beschichtung mit einer Mehrzahl von lichthemmenden Beschichtungsabschnitten aufweist, wobei die lichthemmenden Beschichtungsabschnitte jeweils auf den einzeln ansteuerbaren Leuchtflächen angeordnet sind, wobei zumindest einer der lichthemmenden Beschichtungsabschnitte zumindest eine lichttransparente Aussparung aufweist, wobei die lichttransparente Aussparung zumindest eine Symbolform aufweist, und wobei die Steuerung ausgebildet ist, zumindest eine der einzeln ansteuerbaren Leuchtflächen anzusteuern, um ein der Symbolform entsprechendes Leuchtsymbol auf dem Anzeigeelement darzustellen.

Dadurch wird der technische Vorteil erreicht, dass das Anzeigeelement eine Vielzahl von unterschiedlichen Leuchtsymbolen darstellen kann, welches es dem Nutzer des Wäschepflegegeräts ermöglichen Information über einen Betriebszustand des Wäschepflegegeräts zu erhalten. Die Leuchtsymbole können insbesondere graphische Elemente, Schriftzeichen und/oder Ziffern umfassen.

Die Steuerung kann hierbei die auf der Flüssigkeitskristall-Anzeige angeordneten Leuchtflächen einzeln aktivieren oder deaktivieren, so dass die Leuchtflächen entweder Licht emittieren oder kein Licht emittieren. Durch die auf den Leuchtflächen angeordneten Beschichtungsabschnitte mit den entsprechenden lichttransparenten Aussparungen kann das durch die Leuchtflächen emittierte Licht ausschließlich durch die Aussparungen nach außen dringen, während der übrige Bereich der Leuchtflächen durch die lichthemmende Beschichtung lichtdicht abgedeckt und damit dunkel ist.

Die Aussparungen können hierbei in der gewünschten Symbolform ausgebildet werden, so dass das von den Leuchtflächen durch die lichttransparenten Aussparungen dringende Licht auf einer Oberfläche des Anzeigeelements ein Leuchtsymbol darstellt, wobei das Leuchtsymbol der Symbolform der Aussparung entspricht.

Somit kann durch das Anbringen der jeweiligen lichthemmenden Beschichtungsabschnitte mit den Aussparungen in Symbolform auf den jeweiligen Leuchtflächen eine Vielzahl von unterschiedlichen Leuchtsymbolen auf dem Anzeigeelement dargestellt werden, wodurch eine hohe Darstellungsvielfalt von verschiedenen Leuchtsymbolen bei unterschiedlichen Typen von Wäschepflegegeräten erreicht wird. Zudem bietet eine Flüssigkeitskristall-Anzeige eine kostengünstige Alternative zu oftmals teuren TFT-Displays. Ferner stellt eine Flüssigkeitskristall-Anzeige eine vorteilhafte Anzeigequalität bereit.

Unter einem Wäschepflegegerät wird ein Gerät verstanden, welches zur Wäschepflege eingesetzt wird, wie z.B. eine Waschmaschine oder ein Wäschetrockner. Insbesondere wird unter solch einem Wäschepflegegerät ein Haushaltswäschepflegegerät verstanden. Also ein Wäschepflegegerät, welches im Rahmen der Haushaltsführung verwendet wird, und mit dem Wäsche in haushaltsüblichen Mengen behandelt wird.

In einer vorteilhaften Ausführungsform des Wäschepflegegeräts sind die Leuchtflächen als ovale, insbesondere kreisrunde, und/oder eckige, insbesondere rechteckige, Leuchtflächen ausgebildet, welche horizontal, vertikal und/oder diagonal in der Flüssigkeitskristall-Anzeige angeordnet sind.

Dadurch wird der technische Vorteil erreicht, dass durch die unterschiedliche geometrische Ausbildung der Leuchtflächen, und durch die unterschiedliche Anordnung der Leuchtflächen in der Flüssigkeitskristall-Anzeige, die Leuchtsymbole in variablen Anordnungen an dem Anzeigeelement dargestellt werden können.

In einer vorteilhaften Ausführungsform des Wäschepflegegeräts umfassen die lichthemmenden Beschichtungsabschnitte aufgedruckte lichthemmende Beschichtungsabschnitte, welche auf einer Oberfläche der Flüssigkeitskristall-Anzeige aufgedruckt sind.

Dadurch wird der technische Vorteil erreicht, dass das Aufdrucken, z.B. im Rahmen eines Inkjet-Druckverfahrens, der jeweiligen lichthemmenden Beschichtungsabschnitte auf den jeweiligen Leuchtflächen ein vorteilhaftes Anbringen der lichthemmenden Beschichtung auf den Leuchtflächen sicherstellt. Hierbei können die lichttransparenten Aussparungen insbesondere dadurch gebildet werden, dass bestimmte Bereiche der Oberfläche der Flüssigkeitskristall-Anzeige nicht mit der lichthemmenden Beschichtung beschichtet werden.

Gemäß der Erfindung umfassen die lichthemmenden Beschichtungsabschnitte lichthemmende Folien-Beschichtungsabschnitte, welche auf eine Oberfläche der Flüssigkeitskristall-Anzeige aufgebracht, insbesondere aufgeklebt, sind.

Dadurch wird der technische Vorteil erreicht, dass durch das Aufbringen, bzw. Aufkleben einer lichthemmenden Folie auf die Oberfläche der Flüssigkeitskristall-Anzeige die Leuchtflächen besonders vorteilhaft lichtdicht abgedeckt werden können. Hierbei werden die lichttransparenten Aussparungen in der Folie dadurch gebildet, dass die Symbolform der jeweiligen Aussparung aus der Folie, insbesondere aus den jeweiligen lichthemmenden Folien-Beschichtungsabschnitten herausgetrennt wird, z.B. im Rahmen eines Laser-Etching-Verfahrens.

In einer vorteilhaften Ausführungsform des Wäschepflegegeräts sind die lichthemmenden Beschichtungsabschnitte ausgebildet von den Leuchtflächen emittiertes Licht zumindest abschnittsweise zu absorbieren, um zumindest abschnittsweise dunkle Beschichtungsabschnitte zu erhalten, und/oder sind die lichthemmenden Beschichtungsabschnitte ausgebildet, Wellenlängenbereiche des von den Leuchtflächen emittierten Lichts zumindest abschnittsweise zu absorbieren, um zumindest abschnittsweise farbige Beschichtungsabschnitte zu erhalten.

Dadurch wird der technische Vorteil erreicht, dass bei einer zumindest abschnittsweisen Absorption des von den Leuchtflächen emittierten Lichts durch den jeweiligen lichthemmenden Beschichtungsabschnitt, der entsprechende Abschnitt des jeweiligen lichthemmenden Beschichtungsabschnitts dunkel bleibt. Somit nimmt der Nutzer einen Kontrast zwischen dem durch die jeweilige lichttransparente Aussparung dringenden Licht und dem dunklen Abschnitt des lichthemmenden Beschichtungsabschnitts wahr. Wenn der Abschnitt des lichthemmenden Beschichtungsabschnitts das Licht jedoch nicht vollständig absorbiert, sondern nur einen bestimmten Wellenlängenbereich des emittierten Lichts absorbiert, dringt Licht mit den nicht absorbierten Wellenlängen durch den lichthemmenden Beschichtungsabschnitt hindurch, wobei die nicht absorbierten Wellenlängen des Lichts von dem Nutzer als farbiges Licht wahrgenommen werden. Somit wird in diesem Fall ein Farbkontrast zwischen dem durch den Beschichtungsabschnitt dringenden farbigen Licht und dem durch die Aussparung dringenden Licht mit einer unterschiedlichen Farbe wahrgenommen.

In einer vorteilhaften Ausführungsform des Wäschepflegegeräts sind die einzeln ansteuerbaren Leuchtflächen ausgebildet, weißes und/oder farbiges Licht zu emittieren.

Dadurch wird der technische Vorteil erreicht, dass die Farbe der Leuchtsymbole durch die Farbe des von den Leuchtflächen emittierten Lichts vorteilhaft eingestellt werden kann.

In einer vorteilhaften Ausführungsform des Wäschepflegegeräts ist die Steuerung ausgebildet ist, die Helligkeit, Farbtemperatur und/oder eine Leuchtfrequenz der einzeln ansteuerbaren Leuchtflächen zu steuern.

Dadurch wird der technische Vorteil erreicht, dass durch die Steuerung die Helligkeit der Leuchtsymbole an die Hintergrundbeleuchtung angepasst werden kann, die Farbtemperatur, z.B. 3300 Kelvin bis 5500 Kelvin bei weißem Licht, an die gewünschte Beleuchtungssituation angepasst werden kann, und/oder eine oder mehrere der Leuchtflächen mit einer gewünschten Leuchtfrequenz blinken kann.

In einer vorteilhaften Ausführungsform des Wäschepflegegeräts umfassen die Leuchtsymbole zumindest eines der folgenden Leuchtsymbole: ein Leuchtsymbol, welches einen Öffnungszustand einer Gerätetür des Wäschepflegegeräts darstellt, ein Leuchtsymbol, welches eine Waschtemperatur des Wäschepflegegeräts darstellt, ein Leuchtsymbol, welches eine Dauer eines Wäschepflegeprogramms des Wäschepflegegeräts darstellt, ein Leuchtsymbol, welches ein Ende eines Wäschepflegeprogramms des Wäschepflegegeräts darstellt, ein Leuchtsymbol, welches einen Defekt an dem Wäschepflegegerät darstellt, ein Leuchtsymbol, welches auf eine durchzuführende Reinigung des Wäschepflegegeräts hinweist, ein Leuchtsymbol, welches den Typ eines Wäschepflegeprogramms des Wäschepflegegeräts darstellt.

Dadurch wird der technische Vorteil erreicht, dass durch die Anzeige von einem oder mehreren Leuchtsymbolen der Nutzer vorteilhafte Informationen über den Betriebszustand des Wäschepflegegeräts erhalten kann.

In einer vorteilhaften Ausführungsform des Wäschepflegegeräts weist die Flüssigkeitskristall-Anzeige eine Mehrzahl von einzeln ansteuerbaren Leuchtsegmenten auf, und ist die Steuerung ausgebildet, mehrere der Leuchtsegmente anzusteuern, um eine Mehrzahl von alphanumerischen Zeichen auf der Flüssigkeitskristall-Anzeige darzustellen, wobei die Mehrzahl der dargestellten alphanumerischen Zeichen eine alphanumerische Zeichenfolge bildet.

Dadurch wird der technische Vorteil erreicht, dass die Flüssigkeitskristall-Anzeige neben den Leuchtsymbolen noch eine Vielzahl von leuchtenden alphanumerischen Zeichen darstellen kann, welche dem Nutzer des Wäschepflegegeräts weitere vorteilhafte Informationen bereitstellen kann. Um ein leuchtendes alphanumerisches Zeichen darzustellen, wird eine bestimmte Auswahl einer Vielzahl von Leuchtsegmenten durch die Steuerung aktiviert. Je nach Position und Form der unterschiedlichen aktivierten Leuchtsegmente können somit unterschiedliche alphanumerische Zeichen dargestellt werden.

In einer vorteilhaften Ausführungsform des Wäschepflegegeräts umfasst die alphanumerische Zeichenfolge mehr als zehn, insbesondere elf, zwölf, dreizehn, vierzehn oder fünfzehn alphanumerische Zeichen, welche insbesondere horizontal in der Flüssigkeitskristall-Anzeige angeordnet sind.

Dadurch wird der technische Vorteil erreicht, dass mehr als zehn, insbesondere elf, zwölf, dreizehn, vierzehn oder fünfzehn, alphanumerische Zeichen in der alphanumerischen Zeichenfolge sicherstellen, dass eine Vielzahl von Informationen hinsichtlich eines Wäschepflegevorgangs dem Nutzer des Wäschepflegegeräts zu Verfügung gestellt werden kann.

In einer vorteilhaften Ausführungsform des Wäschepflegegeräts stellen die alphanumerischen Zeichen eine Temperatur von Waschflüssigkeit in dem Wäschepflegegerät, eine Restlaufzeit eines Wäschepflegeprogramms des Wäschepflegegeräts, einen Namen des Wäschepflegeprogramms des Wäschepflegegeräts und/oder eine Rotationsdrehzahl einer Wäschetrommel des Wäschepflegegeräts dar.

Dadurch wird der technische Vorteil erreicht, dass die durch die alphanumerischen Zeichen bereitgestellten Informationen dem Nutzer eine wirksame Überwachung des durch das Wäschepflegegerät durchgeführten Wäschepflegeprogramms ermöglicht.

In einer vorteilhaften Ausführungsform des Wäschepflegegeräts ist eine Abdeckfolie zumindest abschnittsweise auf der Flüssigkeitskristall-Anzeige angeordnet, um die auf dem Anzeigeelement dargestellte alphanumerische Zeichenfolge in eine Mehrzahl der alphanumerischen Zeichenfolgenabschnitte, insbesondere in drei alphanumerische Zeichenfolgeabschnitte, zu unterteilen.

Dadurch wird der technische Vorteil erreicht, dass durch das Anordnen der Abdeckfolie auf dem Anzeigeelement eine wirksame Abgrenzung der auf dem Anzeigeelement bereitgestellten Informationen erreicht werden kann.

In einer vorteilhaften Ausführungsform des Wäschepflegegeräts umfassen die alphanumerischen Zeichen der alphanumerischen Zeichenfolge zumindest einen Buchstaben und/oder zumindest eine Ziffer, insbesondere zumindest einen lateinischen und/oder chinesischen Buchstaben und/oder zumindest eine arabische und/oder chinesische Ziffer.

Dadurch wird der technische Vorteil erreicht, dass die Vielzahl von unterschiedlichen Informationen durch das Anzeigeelement bereitgestellt werden kann.

In einer vorteilhaften Ausführungsform des Wäschepflegegeräts werden die alphanumerischen Zeichen jeweils durch zumindest ein Randleuchtsegment einer Vielzahl von Randleuchtsegmenten gebildet, wobei die Randleuchtsegmente einen Rahmen des alphanumerischen Zeichens begrenzen, werden die alphanumerischen Zeichen jeweils durch ein zentrales Leuchtsegment gebildet, welches in der Mitte des Rahmens angeordnet ist, und werden die alphanumerischen Zeichen jeweils durch zumindest ein symmetrisches Leuchtsegment aus einer Vielzahl von symmetrischen Leuchtsegmente gebildet, wobei sich die symmetrischen Leuchtsegmente spiegelsymmetrisch von dem zentralen Leuchtsegment zu dem Randleuchtsegmenten erstrecken.

Dadurch wird der technische Vorteil erreicht, dass durch das zumindest eine aktivierte Randleuchtsegment, durch das eine aktivierte zentrale Leuchtsegment und durch das zumindest eine aktivierte symmetrische Leuchtsegment eine Vielzahl von unterschiedlichen alphanumerischen Zeichen dargestellt werden kann. Je nach Anzahl und Position der aktivierten Randleuchtsegmente, des zentralen Leuchtsegments und der symmetrischen Leuchtsegmente kann das gewünschte alphanumerische Zeichen auf dem Anzeigeelement dargestellt werden.

In einer vorteilhaften Ausführungsform des Wäschepflegegeräts erstrecken sich zumindest zwei der symmetrischen Leuchtsegmente horizontal und spiegelsymmetrisch von dem zentralen Leuchtsegment zu dem Randleuchtsegmenten und/oder erstrecken sich zumindest zwei der symmetrischen Leuchtsegmente vertikal und spiegelsymmetrisch von dem zentralen Leuchtsegment zu dem Randleuchtsegmenten, und/oder erstrecken sich zumindest zwei der symmetrischen Leuchtsegmente diagonal und spiegelsymmetrisch von dem zentralen Leuchtsegment zu dem Randleuchtsegmenten.

Dadurch wird der technische Vorteil erreicht, dass durch die sich horizontal, vertikal und/oder diagonal von dem zentralen Leuchtsegment zu den Randleuchtsegmenten erstreckenden symmetrischen Leuchtsegmente sichergestellt wird, dass eine Vielzahl von unterschiedlichen alphanumerischen Zeichen durch die Leuchtsegmente dargestellt werden können.

Weitere Ausführungsbeispiele werden Bezug nehmend auf die beiliegenden Zeichnungen erläutert. Es zeigen:
- Fig. 1: eine schematische Ansicht eines Wäschepflegegeräts mit einem Anzeigeelement;
- Fig. 2: eine schematische Ansicht einer Flüssigkeitskristall-Anzeige eines Anzeigeelements eines Wäschepflegegeräts; und
- Fig. 3: eine schematische Ansicht einer auf einem Anzeigeelement dargestellten alphanumerischen Zeichenfolge.

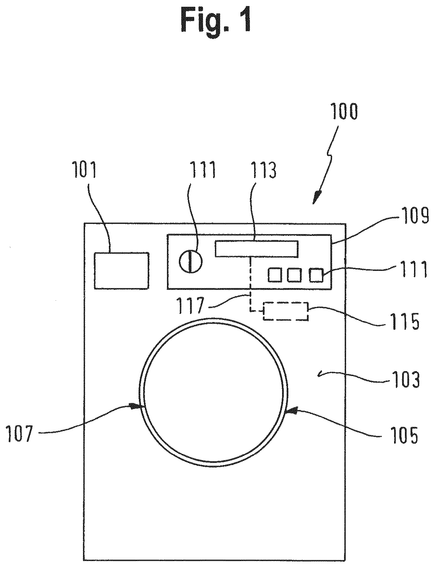

Fig. 1 zeigt eine schematische Ansicht eines allgemeinen Wäschepflegegeräts 100, wie z.B. eine Waschmaschine. Das Wäschepflegegerät 100 umfasst eine Einspülschale 101, in die Waschpflegesubstanz, wie z.B. Waschmittel, eingefüllt werden kann. Das Wäschepflegegerät 100 weist an einer Vorderseite 103 des Wäschepflegegeräts 100 eine Geräteöffnung 105 und eine Gerätetür 107 zum Verschließen der Geräteöffnung 105 auf. Durch die Gerätetür 107 kann das Wäschepflegegerät 100 mit Wäsche beladen werden.

An der Vorderseite 103 des Wäschepflegegeräts 100 ist neben der Einspülschale 101 und oberhalb der Gerätetür 107 ein Bedienfeld 109 angeordnet, durch welches der Nutzer des Wäschepflegegeräts 100 das Wäschepflegegerät 100 bedienen kann. Das Bedienfeld 109 kann unterschiedliche Bedienelemente 111, wie z.B. einen Wählschalter zur Auswahl eines Wäschepflegeprogramms des Wäschepflegegeräts 100 oder z.B. unterschiedliche Einstelltasten zum Einstellen von unterschiedlichen Wäscheoptionen des ausgewählten Wäschepflegeprogramms aufweisen.

Das Bedienfeld 109 weist ferner ein Anzeigeelement 113 auf, welches als eine Flüssigkeitskristall-Anzeige ausgebildet ist. Das Anzeigeelement 113 wird durch eine in Fig. 1 nur schematisch dargestellte Steuerung 115 gesteuert, welche mit dem Anzeigeelement 113 durch eine Steuerungsverbindung 117 verbunden ist. Die Steuerung 115 steuert das Anzeigeelement 113, so dass das Anzeigeelement 113 insbesondere Leuchtsymbole und/oder eine alphanumerische Zeichenfolge anzeigt.

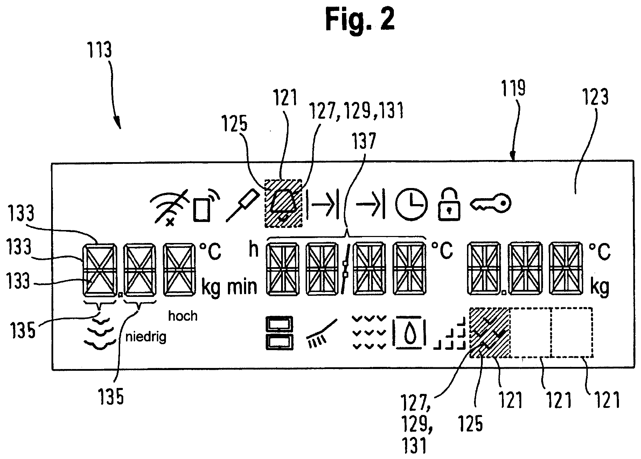

Fig. 2 zeigt eine schematische Ansicht einer Flüssigkeitskristall-Anzeige eines Anzeigeelements eines Wäschepflegegeräts. Das Anzeigeelement 113 weist eine Flüssigkeitskristall-Anzeige 119 auf. Die Flüssigkeitskristall-Anzeige 119 weist eine Mehrzahl von einzeln ansteuerbaren Leuchtflächen 121 auf, welche in Fig. 2 nur schematisch und exemplarisch dargestellt sind. In der in Fig. 2 dargestellten Ausführungsform sind die Leuchtflächen 121 als rechteckige Leuchtflächen 121 ausgebildet, welche horizontal und vertikal in der Flüssigkeitskristall-Anzeige 119 angeordnet sind. Die Leuchtflächen 121 können jedoch auch als beliebige ovale, insbesondere kreisrunde, und/oder eckige Leuchtflächen 121 ausgebildet sein.

Das Anzeigeelement 113 weist ferner eine lichthemmende Beschichtung 123 mit einer Mehrzahl an lichthemmenden Beschichtungsabschnitten 125 auf, wobei die jeweiligen lichthemmenden Beschichtungsabschnitte 125 jeweils auf den einzeln ansteuerbaren Leuchtflächen 121 angeordnet sind. Einige der lichthemmenden Beschichtungsabschnitte 125 weisen zumindest eine lichttransparente Aussparung 127 auf, wobei die lichttransparente Aussparung 127 zumindest eine Symbolform 129 aufweist. Eine Steuerung 115 des Wäschepflegegeräts 100 steuert die einzeln ansteuerbaren Leuchtflächen 121 derart an, dass die einzeln ansteuerbaren Leuchtflächen 121 aktiviert werden, um ein der Symbolform 129 entsprechendes Leuchtsymbol 131 darzustellen.

In der in Fig. 2 dargestellten Ausführungsform ist die lichthemmende Beschichtung 123 ausgebildet, dass von den Leuchtflächen 121 emittierte Licht fast vollständig zu absorbieren, wodurch die in der Fig. 2 dargestellten durch die lichthemmende Beschichtung 123 abgedeckten lichthemmenden und damit dunklen Beschichtungsabschnitte 125 der Leuchtflächen 121 in schwarzer Farbe dargestellt sind. Es ist jedoch alternativ möglich, dass die lichthemmenden Beschichtungsabschnitte 125 ausgebildet sind, nur bestimmte Wellenlängenbereiche des von den Leuchtflächen 121 emittierten Lichts zu absorbieren, wodurch farbig leuchtende Beschichtungsabschnitte 125 erhalten werden.

An den Stellen der lichthemmenden Beschichtungsabschnitte 125 an denen die lichttransparenten Aussparungen 127 angeordnet sind, dringt das von den Leuchtflächen 121 emittierte Licht durch die Beschichtung 123 und kann durch den Nutzer des Wäschepflegegeräts 100 wahrgenommen werden. Dadurch, dass die jeweiligen lichttransparenten Aussparungen 127 unterschiedliche Symbolformen 129 aufweisen, wird das von den Leuchtflächen 121 emittierte und durch die lichttransparenten Aussparungen 127 abgestrahlte Licht von dem Nutzer des Wäschepflegegeräts 100 als ein Leuchtsymbol 131 wahrgenommen.

Die lichthemmende Beschichtung 123 mit den lichthemmenden Beschichtungsabschnitten 125 kann hierbei auf eine Oberfläche der Flüssigkeitskristall-Anzeige 119 aufgedruckt sein, beispielsweise im Rahmen eines Druckverfahrens, wie z.B. Inkjet-Druck. Die in den lichthemmenden Beschichtungsabschnitten 125 vorhandenen lichttransparenten Aussparungen 127 können hierbei erhalten werden, in dem in den entsprechenden Bereichen keine lichthemmende Beschichtung 123 auf die Oberfläche der Flüssigkeitskristall-Anzeige 119 aufgedruckt wird.

Alternativ oder zusätzlich kann auch eine lichthemmende Folie als lichthemmende Beschichtung 123 verwendet werden, welche auf die Oberfläche der Flüssigkeitskristall-Anzeige 119 aufgeklebt wird. Die in den lichthemmenden Beschichtungsabschnitten 125 der Folie vorhandenen lichttransparenten Aussparungen 127 können erhalten werden, in dem die lichttransparenten Aussparungen 127 aus der Folie heraus getrennt werden, z.B. im Rahmen eines Laser-Etching-Verfahrens.

Die Leuchtsymbole 131 können unterschiedliche graphische Elemente umfassen, welche es dem Nutzer des Wäschepflegegeräts 100 ermöglichen das Leuchtsymbol 131 mit einem Zustand und/oder mit einer Funktion des Wäschepflegegeräts 100 in Zusammenhang zu bringen.

Die Leuchtsymbole 131 können zumindest eines der folgenden Leuchtsymbole 131 umfassen: ein Leuchtsymbol 131, welches einen Öffnungszustand einer Gerätetür des Wäschepflegegeräts 100 darstellt, ein Leuchtsymbol 131, welches eine Waschtemperatur des Wäschepflegegeräts 100 darstellt, ein Leuchtsymbol 131, welches eine Dauer eines Wäschepflegeprogramms des Wäschepflegegeräts 100 darstellt, ein Leuchtsymbol 131, welches ein Ende eines Wäschepflegeprogramms des Wäschepflegegeräts 100 darstellt, ein Leuchtsymbol 131, welches einen Defekt an dem Wäschepflegegerät 100 darstellt, ein Leuchtsymbol 131, welches auf eine durchzuführende Reinigung des Wäschepflegegeräts 100 hinweist, ein Leuchtsymbol 131, welches den Typ eines Wäschepflegeprogramms des Wäschepflegegeräts 100 darstellt.

Im Vergleich zu herkömmlich verwendeten TFT-Displays ermöglicht eine Flüssigkeitskristall-Anzeige 119 gemäß der vorliegenden Offenbarung eine kostengünstige Herstellung eines Anzeigeelements 113 mit einer hohen Anzeigequalität. Durch die flexiblen Ausgestaltungsmöglichkeiten der lichthemmenden Beschichtungsabschnitte 125 und der lichttransparenten Aussparungen 127 kann eine große Varianz in den Darstellungsmöglichkeiten der Leuchtsymbole 131 in unterschiedlichen Typen von Wäschepflegegeräten 100 sichergestellt werden.

Zudem kann das als Flüssigkeitskristall-Anzeige 119 ausgebildete Anzeigeelement 113 auch eine Mehrzahl von einzeln ansteuerbaren Leuchtsegmenten 133 aufweisen. Die Steuerung 115 des Wäschepflegegeräts 100 kann die Leuchtsegmente 133 einzeln ansteuern, um eine Mehrzahl von alphanumerischen Zeichen 135 auf der Flüssigkeitskristall-Anzeige 119 darzustellen, wobei die Mehrzahl der alphanumerischen Zeichen 135 eine alphanumerische Zeichenfolge 137 bildet.

Beispielsweise können die alphanumerischen Zeichen 135 eine Temperatur von Waschflüssigkeit in dem Wäschepflegegerät 100, eine Restlaufzeit eines Wäschepflegeprogramms des Wäschepflegegeräts 100, einen Namen eines Wäschepflegeprogramms des Wäschepflegegeräts 100 und/oder eine Rotationsdrehzahl einer Wäschetrommel des Wäschepflegegeräts 100 umfassen.

Somit ermöglicht das Anzeigeelement 113 gemäß der vorliegenden Offenbarung neben den Leuchtsymbolen 131 zusätzlich noch eine Mehrzahl von alphanumerischen Zeichen 135 darzustellen, wodurch der Anwendungsbereich des Anzeigeelements 113 erweitert werden kann.

Somit kann durch das als Flüssigkeitskristall-Anzeige 119 ausgebildete Anzeigeelement 113 eine kostengünstige Herstellbarkeit, eine große Anzeigevarianz und eine gute Darstellungsqualität sichergestellt werden.

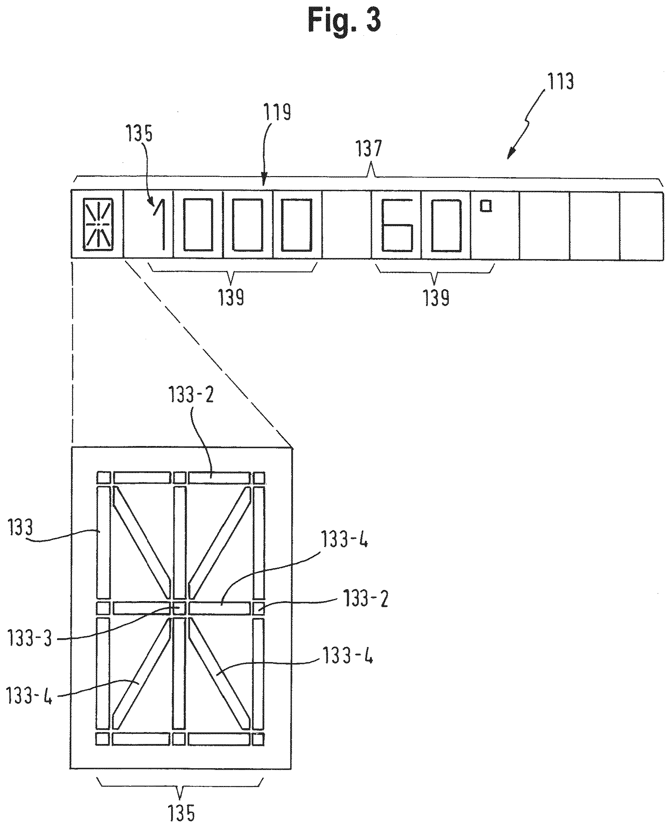

Fig. 3 zeigt eine schematische Ansicht einer auf dem Anzeigeelement dargestellten alphanumerischen Zeichenfolge, wobei ein alphanumerisches Zeichen 135 der alphanumerischen Zeichenfolge 137 vergrößert dargestellt ist. Das Anzeigeelement 113 ist als eine Flüssigkeitskristall-Anzeige 119 ausgebildet, welche eine Mehrzahl von einzeln ansteuerbaren Leuchtsegmenten 133 aufweist. Die Steuerung 115 des Wäschepflegegeräts 100 aktiviert die für die Darstellung eines alphanumerischen Zeichens 135 notwendigen Leuchtsegmente 133, um das jeweilige alphanumerische Zeichen 135 darzustellen.

Die Mehrzahl von dargestellten alphanumerischen Zeichen 135 bildet eine alphanumerische Zeichenfolge 137, wobei die alphanumerischen Zeichen 135 hierbei insbesondere einen Buchstaben, insbesondere lateinischen und/oder chinesische Buchstaben, und/oder eine Ziffer, insbesondere eine arabische und/oder chinesische Ziffer, umfassen.

Die in der Fig. 3 dargestellte alphanumerische Zeichenfolge 137 umfasst mehr als zehn alphanumerische Zeichen 135, insbesondere elf, zwölf, dreizehn, vierzehn oder fünfzehn alphanumerische Zeichen 135, welche nebeneinander angeordnet sind. Somit kann mit den alphanumerischen Zeichen 135 beispielsweise eine Temperatur von Waschflüssigkeit in dem Wäschepflegegerät 100, eine Restlaufzeit eines Wäschepflegeprogramms des Wäschepflegegeräts 100, ein Namen eines Wäschepflegeprogramms des Wäschepflegegeräts 100 und/oder eine Rotationsdrehzahl einer Wäschetrommel des Wäschepflegegeräts 100 gleichzeitig in dem Anzeigeelement 113 dargestellt werden.

Um die einzelnen auf dem Anzeigeelement 113 dargestellten Informationen voneinander abzugrenzen kann die alphanumerische Zeichenfolge 137 in eine Mehrzahl von, insbesondere drei, Zeichenfolgeabschnitten 139 unterteilt werden. Die Zeichenfolgeabschnitte 139 können beispielsweise durch das Aufkleben einer Abdeckfolie auf die Flüssigkeitskristall-Anzeige 119 voneinander abgegrenzt werden.

Wie in Fig. 3 dargestellt ist, wird jedes der alphanumerischen Zeichen 135 durch eine Mehrzahl von Leuchtsegmenten 133 gebildet, welche durch die Steuerung 115 einzeln aktiviert werden können. Die in der Fig. 3 dargestellten Leuchtsegmente umfassen sechzehn Randleuchtsegmente 133-2, welche einen Rahmen des alphanumerischen Zeichens 135 begrenzen, sowie ein zentrales Leuchtsegment 133-3, welches in der Mitte des Rahmens angeordnet ist, sowie acht symmetrische Leuchtsegmente 133-4, welche sich spiegelsymmetrisch von dem zentralen Leuchtsegment 133-3 zu den Randleuchtsegmenten 133-2 erstrecken. Durch das Aktivieren von spezifischen Leuchtsegmenten 133 aus der in Fig. 3 dargestellten Vielzahl von Leuchtsegmenten 133 kann ein gewünschtes alphanumerisches Zeichen 135 dargestellt werden.

Somit kann durch das in Fig. 3 dargestellten Anzeigeelement 113 eine Mehrzahl von alphanumerischen Zeichen 135 darstellen, welche die gewünschten Informationen dem Nutzer des Wäschepflegegeräts 100 bereitstellen.

Das Anzeigeelement 113 kann hierbei z.B. in einer in China verwendeten Ausführungsform vorwiegend Zahlen-basierte Informationen darstellen und kann hierbei z.B. in einer anderen Ausführungsform textuelle Informationen, z.B. Wäschepflegeprogrammenamen, darstellen. Hierdurch wird eine verbesserte Verwendbarkeit für Designdifferenzierungen gegenüber klassischen 7-Segment-Anzeigen erreicht, wodurch der Anwendungsspielraum erweitert werden kann.

Der Schutzbereich der vorliegenden Erfindung ist durch die Ansprüche gegeben und wird durch die in der Beschreibung erläuterten oder den Figuren gezeigten Merkmale nicht beschränkt.

### Bezugszeichenliste

- 100: Wäschepflegegerät
- 101: Einspülschale
- 103: Vorderseite des Wäschepflegegeräts
- 105: Geräteöffnung
- 107: Gerätetür
- 109: Bedienfeld
- 111: Bedienelement
- 113: Anzeigeelement
- 115: Steuerung
- 117: Steuerungsverbindung
- 119: Flüssigkeitskristall-Anzeige
- 121: Leuchtfläche
- 123: Lichthemmende Beschichtung
- 125: Lichthemmender Beschichtungsabschnitt
- 127: Lichttransparente Aussparung
- 129: Symbolform
- 131: Leuchtsymbol
- 133: Leuchtsegment
- 133-2: Randleuchtsegment
- 133-3: Zentrales Leuchtsegment
- 133-4: Symmetrisches Leuchtsegment
- 135: Alphanumerisches Zeichen
- 137: Alphanumerische Zeichenfolge
- 139: Alphanumerischer Zeichenfolgenabschnitt

## Patentansprüche

1. Wäschepflegegerät (100) mit einem Anzeigeelement (113) zum Anzeigen von Leuchtsymbolen (131), und einer Steuerung (115) zum Steuern des Anzeigeelements (113), wobei
das Anzeigeelement (113) eine Flüssigkeitskristall-Anzeige (119) aufweist, welche eine Mehrzahl von einzeln ansteuerbaren Leuchtflächen (121) aufweist, wobei
das Anzeigeelement (113) eine lichthemmende Beschichtung (123) mit einer Mehrzahl von lichthemmenden Beschichtungsabschnitten (125) aufweist, wobei die lichthemmenden Beschichtungsabschnitte (125) jeweils auf den einzeln ansteuerbaren Leuchtflächen (121) angeordnet sind,
wobei zumindest einer der lichthemmenden Beschichtungsabschnitte (125) zumindest eine lichttransparente Aussparung (127) aufweist, wobei die lichttransparente Aussparung (127) zumindest eine Symbolform (129) aufweist, und wobei
die Steuerung (115) ausgebildet ist, zumindest eine der einzeln ansteuerbaren Leuchtflächen (121) anzusteuern, um ein der Symbolform (129) entsprechendes Leuchtsymbol (131) auf dem Anzeigeelement (113) darzustellen, **dadurch gekennzeichnet, dass** die lichthemmenden Beschichtungsabschnitte (125) lichthemmende Folien-Beschichtungsabschnitte (125) umfassen, welche auf einer Oberfläche der Flüssigkeitskristall-Anzeige (119) aufgebracht, insbesondere aufgeklebt, sind, wobei die zumindest eine lichttransparente Aussparung (127) in der Folie dadurch gebildet ist, dass die Symbolform (129) der zumindest einen lichttransparenten Aussparung (127) aus der Folie herausgetrennt ist.

2. Wäschepflegegerät (100) nach Anspruch 1, **dadurch gekennzeichnet, dass** die Leuchtflächen (121) als ovale, insbesondere kreisrunde, und/oder eckige, insbesondere rechteckige, Leuchtflächen (121) ausgebildet sind, welche horizontal, vertikal und/oder diagonal in der Flüssigkeitskristall-Anzeige (119) angeordnet sind.

3. Wäschepflegegerät (100) nach Anspruch 1 oder 2, **dadurch gekennzeichnet, dass** die lichthemmenden Beschichtungsabschnitte (125) aufgedruckte lichthemmende Beschichtungsabschnitte (125), welche auf einer Oberfläche der Flüssigkeitskristall-Anzeige (119) aufgedruckt sind, umfassen.

4. Wäschepflegegerät (100) nach einem der vorangehenden Ansprüche, **dadurch gekennzeichnet, dass** die lichthemmenden Beschichtungsabschnitte (125) ausgebildet sind von den Leuchtflächen (121) emittiertes Licht zumindest abschnittsweise zu absorbieren, um zumindest abschnittsweise dunkle Beschichtungsabschnitte (125) zu erhalten, und/oder dass
die lichthemmenden Beschichtungsabschnitte (125) ausgebildet sind, Wellenlängenbereiche des von den Leuchtflächen (121) emittierten Lichts zumindest abschnittsweise zu absorbieren, um zumindest abschnittsweise farbige Beschichtungsabschnitte (125) zu erhalten.

5. Wäschepflegegerät (100) nach einem der vorangehenden Ansprüche, **dadurch gekennzeichnet, dass** die einzeln ansteuerbaren Leuchtflächen (121) ausgebildet sind, weißes und/oder farbiges Licht zu emittieren.

6. Wäschepflegegerät (100) nach einem der vorangehenden Ansprüche, **dadurch gekennzeichnet, dass** die Steuerung (115) ausgebildet ist, die Helligkeit, Farbtemperatur und/oder eine Leuchtfrequenz der einzeln ansteuerbaren Leuchtflächen (121) zu steuern.

7. Wäschepflegegerät (100) nach einem der vorangehenden Ansprüche, **dadurch gekennzeichnet, dass** die Leuchtsymbole (131) zumindest eines der folgenden Leuchtsymbole (131) umfassen: ein Leuchtsymbol (131), welches einen Öffnungszustand einer Gerätetür (107) des Wäschepflegegeräts (100) darstellt, ein Leuchtsymbol (131), welches eine Waschtemperatur des Wäschepflegegeräts (100) darstellt, ein Leuchtsymbol (131), welches eine Dauer eines Wäschepflegeprogramms des Wäschepflegegeräts (100) darstellt, ein Leuchtsymbol (131), welches ein Ende eines Wäschepflegeprogramms des Wäschepflegegeräts (100) darstellt, ein Leuchtsymbol (131), welches einen Defekt an dem Wäschepflegegerät (100) darstellt, ein Leuchtsymbol (131), welches auf eine durchzuführende Reinigung des Wäschepflegegeräts (100) hinweist, ein Leuchtsymbol (131), welches den Typ eines Wäschepflegeprogramms des Wäschepflegegeräts (100) darstellt.

8. Wäschepflegegerät (100) nach einem der vorangehenden Ansprüche, **dadurch gekennzeichnet, dass** die Flüssigkeitskristall-Anzeige (119) eine Mehrzahl von einzeln ansteuerbaren Leuchtsegmenten (133) aufweist, und dass die Steuerung (115) ausgebildet ist, mehrere der Leuchtsegmente (133) anzusteuern, um eine Mehrzahl von alphanumerischen Zeichen (135) auf der Flüssigkeitskristall-Anzeige (119) darzustellen, wobei die Mehrzahl der dargestellten alphanumerischen Zeichen (135) eine alphanumerische Zeichenfolge (137) bildet.

9. Wäschepflegegerät (100) nach Anspruch 8, **dadurch gekennzeichnet, dass** die alphanumerische Zeichenfolge (137) mehr als zehn, insbesondere elf, zwölf, dreizehn, vierzehn oder fünfzehn alphanumerische Zeichen (135) umfasst, welche insbesondere horizontal in der Flüssigkeitskristall-Anzeige (119) angeordnet sind.

10. Wäschepflegegerät (100) nach Anspruch 8 oder 9, **dadurch gekennzeichnet, dass** die alphanumerischen Zeichen (135) eine Temperatur von Waschflüssigkeit in dem Wäschepflegegerät (100), eine Restlaufzeit eines Wäschepflegeprogramms des Wäschepflegegeräts (100), einen Namen des Wäschepflegeprogramms des Wäschepflegegeräts (100) und/oder eine Rotationsdrehzahl einer Wäschetrommel des Wäschepflegegeräts (100) darstellen.

11. Wäschepflegegerät (100) nach einem der vorangehenden Ansprüche 8 bis 10, **dadurch gekennzeichnet, dass** eine Abdeckfolie zumindest abschnittsweise auf dem Flüssigkeitskristall-Anzeige (119) angeordnet ist, um die auf dem Anzeigeelement (113) dargestellte alphanumerische Zeichenfolge (137) in eine Mehrzahl von alphanumerischen Zeichenfolgenabschnitte (139), insbesondere in drei alphanumerische Zeichenfolgeabschnitte (139), zu unterteilen.

12. Wäschepflegegerät (100) nach einem der vorangehenden Ansprüche 8 bis 11, **dadurch gekennzeichnet, dass** die alphanumerischen Zeichen (135) der alphanumerischen Zeichenfolge (137) zumindest einen Buchstaben und/oder zumindest eine Ziffer umfassen, insbesondere einen lateinischen und/oder chinesischen Buchstaben und/oder eine arabische und/oder chinesische Ziffer.

13. Wäschepflegegerät (100) nach einem der vorangehenden Ansprüche 8 bis 12, **dadurch gekennzeichnet, dass** die alphanumerischen Zeichen (135) jeweils durch zumindest ein Randleuchtsegment (133-2) einer Vielzahl von Randleuchtsegmenten (133-2) gebildet werden, wobei die Randleuchtsegmente (133-2) einen Rahmen des alphanumerischen Zeichens (135) begrenzen, dass die alphanumerischen Zeichen (135) jeweils durch ein zentrales Leuchtsegment (133-3) gebildet werden, welches in der Mitte des Rahmens angeordnet ist, und dass die alphanumerischen Zeichen (135) jeweils durch zumindest ein symmetrisches Leuchtsegment (133-4) einer Vielzahl von symmetrischen Leuchtsegmenten (133-4) gebildet werden, wobei sich die symmetrischen Leuchtsegmente (133-4) spiegelsymmetrisch von dem zentralen Leuchtsegment (133-3) zu den Randleuchtsegmenten (133-2) erstrecken.

14. Wäschepflegegerät (100) nach Anspruch 13, **dadurch gekennzeichnet, dass** sich zumindest zwei der symmetrischen Leuchtsegmente (133-4) horizontal und spiegelsymmetrisch von dem zentralen Leuchtsegment (133-3) zu den Randleuchtsegmenten (133-2) erstrecken, und/oder dass sich zumindest zwei der symmetrischen Leuchtsegmente (133-4) vertikal und spiegelsymmetrisch von dem zentralen Leuchtsegment (133-3) zu dem Randleuchtsegmenten (133-2) erstrecken, und/oder dass sich zumindest zwei der symmetrischen Leuchtsegmente (133-4) diagonal und spiegelsymmetrisch von dem zentralen Leuchtsegment (133-3) zu dem Randleuchtsegmenten (133-2) erstrecken.

## Claims

1. Laundry care appliance (100) with a display element (113) for displaying lighting symbols (131), and a controller (115) for controlling the display element (113), wherein
the display element (113) has a liquid crystal display (119), which has a plurality of individually actuatable lighting areas (121), wherein
the display element (113) has a light-inhibiting coating (123) with a plurality of light-inhibiting coating sections (125), wherein the light-inhibiting coating sections (125) are in each case arranged on the individually actuatable lighting areas (121),
wherein at least one of the light-inhibiting coating sections (125) has at least one recess (127) that is transparent to light, wherein the recess (127) that is transparent to light has at least one symbol shape (129), and wherein
the controller (115) is embodied to actuate at least one of the individually actuatable lighting areas (121), in order to represent a lighting symbol (131) corresponding to the symbol shape (129) on the display element (113), **characterised in that** the light-inhibiting coating sections (125) comprise light-inhibiting film coating sections (125), which are applied, in particular adhesively bonded, to a surface of the liquid crystal display (119), wherein the at least one recess (127), which is transparent to light, in the film is formed by the symbol shape (129) of the at least one recess (127) that is transparent to light being separated from the film.

2. Laundry care appliance (100) according to claim 1, **characterised in that** the lighting areas (121) are embodied as oval, in particular circular, and/or angular, in particular rectangular, lighting areas (121), which are arranged horizontally, vertically and/or diagonally in the liquid crystal display (119).

3. Laundry care appliance (100) according to claim 1 or 2, **characterised in that** the light-inhibiting coating sections (125) comprise printed light-inhibiting coating sections (125), which are printed on a surface of the liquid crystal display (119).

4. Laundry care appliance (100) according to one of the preceding claims, **characterised in that** the light-inhibiting coating sections (125) are embodied to absorb light, which is emitted by the lighting areas (121), at least in sections, in order to obtain coating sections (125) that are dark, at least in sections, and/or that
the light-inhibiting coating sections (125) are embodied to absorb wavelength ranges of the light, which is emitted by the lighting areas (121), at least in sections, in order to obtain coating sections (125) that are coloured, at least in sections.

5. Laundry care appliance (100) according to one of the preceding claims, **characterised in that** the individually actuatable lighting areas (121) are embodied to emit white and/or coloured light.

6. Laundry care appliance (100) according to one of the preceding claims, **characterised in that** the controller (115) is embodied to control the brightness, colour temperature and/or a light frequency of the individually actuatable lighting areas (121).

7. Laundry care appliance (100) according to one of the preceding claims, **characterised in that** the lighting symbols (131) comprise at least one of the following lighting symbols (131): a lighting symbol (131) which represents an opening state of an appliance door (107) of the laundry care appliance (100), a lighting symbol (131) which represents a washing temperature of the laundry care appliance (100), a lighting symbol (131) which represents a duration of a laundry care program of the laundry care appliance (100), a lighting symbol (131) which represents an end of a laundry care program of the laundry care appliance (100), a lighting symbol (131) which represents a defect on the laundry care appliance (100), a lighting symbol (131) which indicates that a cleaning of the laundry care appliance (100) is to be performed, a lighting symbol (131) which represents the type of a laundry care program of the laundry care appliance (100).

8. Laundry care appliance (100) according to one of the preceding claims, **characterised in that** the liquid crystal display (119) has a plurality of individually actuatable lighting segments (133), and that the controller (115) is embodied to actuate a plurality of the lighting segments (133), in order to represent a plurality of alphanumeric characters (135) on the liquid crystal display (119), wherein the plurality of alphanumeric characters (135) represented forms an alphanumeric character string (137).

9. Laundry care appliance (100) according to claim 8, **characterised in that** the alphanumeric character string (137) comprises more than ten, in particular eleven, twelve, thirteen, fourteen or fifteen alphanumeric characters (135), which in particular are arranged horizontally in the liquid crystal display (119).

10. Laundry care appliance (100) according to claim 8 or 9, **characterised in that** the alphanumeric characters (135) represent a temperature of washing liquid in the laundry care appliance (100), a remaining running time of a laundry care program of the laundry care appliance (100), a name of the laundry care program of the laundry care appliance (100) and/or a rotational speed of a laundry drum of the laundry care appliance (100).

11. Laundry care appliance (100) according to one of the preceding claims 8 to 10, **characterised in that** a cover film is arranged on the liquid crystal display (119), at least in sections, in order to divide the alphanumeric character string (137) represented on the display element (113) into a plurality of alphanumeric character string sections (139), in particular into three alphanumeric character string sections (139).

12. Laundry care appliance (100) according to one of the preceding claims 8 to 11, **characterised in that** the alphanumeric characters (135) of the alphanumeric character string (137) comprise at least one letter and/or at least one numeral, in particular a Latin letter and/or Chinese character and/or an Arabic and/or Chinese numeral.

13. Laundry care appliance (100) according to one of the preceding claims 8 to 12 , **characterised in that** the alphanumeric characters (135) in each case are formed by at least one boundary lighting segment (133-2) of a large number of boundary lighting segments (133-2), wherein the boundary lighting segments (133-2) delimit a frame of the alphanumeric character (135), that the alphanumeric characters (135) in each case are formed by a central lighting segment (133-3), which is arranged in the centre of the frame, and that the alphanumeric characters (135) in each case are formed by at least one symmetrical lighting segment (133-4) of a large number of symmetrical lighting segments (133-4), wherein the symmetrical lighting segments (133-4) extend with mirror symmetry from the central lighting segment (133-3) to the boundary lighting segment (133-2).

14. Laundry care appliance (100) according to claim 13, **characterised in that** at least two of the symmetrical lighting segments (133-4) extend horizontally and with mirror symmetry from the central lighting segment (133-3) to the boundary lighting segments (133-2), and/or that at least two of the symmetrical lighting segments (133-4) extend vertically and with mirror symmetry from the central lighting segment (133-3) to the boundary lighting segments (133-2), and/or that at least two of the symmetrical lighting segments (133-4) extend diagonally and with mirror symmetry from the central lighting segment (133-3) to the boundary lighting segments (133-2).

## Revendications

1. Appareil d'entretien du linge (100) pourvu d'un élément d'affichage (113) pour afficher des symboles lumineux (131) et d'une commande (115) pour commander l'élément d'affichage, dans lequel
l'élément d'affichage (113) présente un affichage à cristaux liquides (119) qui présente une pluralité de surfaces lumineuses commandées individuellement (121), où l'élément d'affichage (113) présente une couche d'absorption lumineuse (123) avec une pluralité de sections de revêtement d'absorption lumineuse (125), où les sections de revêtement d'absorption lumineuse (125) sont disposées respectivement sur les surfaces lumineuses commandées individuellement (121),
où au moins une des sections de revêtement d'absorption lumineuse (125) présente au moins une ouverture transparente (127), l'ouverture transparente (127) présentant au moins une forme de symbole (129), et
où la commande (115) est conçue pour commander au moins l'une des surfaces lumineuses commandées individuellement (121) afin de représenter un symbole lumineux (131) correspondant à la forme de symbole (129) sur l'élément d'affichage (113), **caractérisé en ce que** les sections de revêtement d'absorption lumineuse (125) comprennent des sections de revêtement d'absorption lumineuse en feuilles (125) qui sont appliquées, en particulier collées, sur une surface de l'affichage à cristaux liquides (119), où l'au moins une ouverture transparente (127) dans la feuille est formée de sorte que la forme de symbole (129) de l'au moins une ouverture transparente (127) est enlevée de la feuille.

2. Appareil d'entretien du linge (100) selon la revendication 1, **caractérisé en ce que** les surfaces lumineuses (121) sont constituées de surfaces lumineuses (121) ovales, en particulier circulaires et/ou anguleuses, en particulier rectangulaires, qui sont disposées horizontalement, verticalement et/ou diagonalement sur l'affichage à cristaux liquides (119).

3. Appareil d'entretien du linge (100) selon la revendication 1 ou 2, **caractérisé en ce que** les sections de revêtement d'absorption lumineuse (125) comprennent des sections de revêtement d'absorption lumineuse (125) imprimées qui sont imprimées sur une surface de l'affichage à cristaux liquides (119).

4. Appareil d'entretien du linge (100) selon l'une des revendications précédentes, **caractérisé en ce que** les sections de revêtement d'absorption lumineuse (125) sont conçues pour absorber au moins partiellement la lumière émise par les surfaces lumineuses (121) afin d'obtenir au moins partiellement des sections de revêtement obscures (125), et/ou **en ce**
**que** les sections de revêtement d'absorption lumineuse (125) sont conçues pour absorber des gammes de longueurs d'onde de la lumière émise par les surfaces lumineuses (121) au moins par sections pour obtenir au moins partiellement des sections de revêtement colorées (125).

5. Appareil d'entretien du linge (100) selon l'une des revendications précédentes, **caractérisé en ce que** les surfaces lumineuses commandées individuellement (121) sont conçues pour émettre de la lumière blanche et/ou colorée.

6. Appareil d'entretien du linge (100) selon l'une des revendications précédentes, **caractérisé en ce que** la commande (115) est conçue pour commander la luminosité, la température de couleur et/ou une fréquence lumineuse des surfaces lumineuses commandées individuellement (121).

7. Appareil d'entretien du linge (100) selon l'une des revendications précédentes, **caractérisé en ce que** les symboles lumineux (131) comprennent au moins l'un des symboles lumineux suivants (131) : un symbole lumineux (131) qui représente un état d'ouverture d'une porte d'appareil (107) de l'appareil d'entretien du linge (100), un symbole lumineux (131) qui représente une température de lavage de l'appareil d'entretien du linge (100), un symbole lumineux (131) qui représente une durée d'un programme d'entretien de l'appareil d'entretien du linge (100), un symbole lumineux (131) qui représente une fin d'un programme d'entretien de l'appareil d'entretien du linge (100), un symbole lumineux (131) qui représente un dysfonctionnement de l'appareil d'entretien du linge (100), un symbole lumineux (131) qui indique un nettoyage à effectuer de l'appareil d'entretien du linge (100), un symbole lumineux (131) qui représente le type de programme d'entretien du linge de l'appareil d'entretien du linge (100).

8. Appareil d'entretien du linge (100) selon l'une des revendications précédentes, **caractérisé en ce que** l'affichage à cristaux liquides (119) présente une pluralité de segments lumineux commandés individuellement (133) et **en ce que** la commande (115) est conçue pour commander plusieurs des segments lumineux (133) afin de représenter une pluralité de caractères alphanumériques (135) sur l'affichage à cristaux liquides (119),
dans lequel la pluralité des caractères alphanumériques représentés (135) forme une chaîne de caractères alphanumériques (137).

9. Appareil d'entretien du linge (100) selon la revendication 8, **caractérisé en ce que** la chaîne de caractères alphanumériques (137) comprend plus de dix, en particulier onze, douze, treize, quatorze ou quinze caractères alphanumériques (135) qui sont disposés en particulier horizontalement dans l'affichage à cristaux liquides (119).

10. Appareil d'entretien du linge (100) selon l'une des revendications précédentes 8 ou 9, **caractérisé en ce que** les caractères alphanumériques (135) représentent une température du liquide de lavage dans l'appareil d'entretien du linge (100), une durée restante d'un programme d'entretien du linge de l'appareil d'entretien du linge (100), un nom du programme d'entretien du linge de l'appareil d'entretien du linge (100) et/ou une vitesse de rotation d'un tambour de lavage de l'appareil d'entretien du linge (100).

11. Appareil d'entretien du linge (100) selon l'une des revendications précédentes 8 à 10, **caractérisé en ce qu'**une feuille de masquage est disposée au moins partiellement sur l'affichage à cristaux liquides (119) pour diviser la chaîne de caractères alphanumériques (137) représentée sur l'élément d'affichage (113) en une pluralité de sections de chaînes de caractères alphanumériques (139), en particulier en trois sections de chaînes de caractères alphanumériques (139).

12. Appareil d'entretien du linge (100) selon l'une des revendications précédentes 8 à 11, **caractérisé en ce que** les caractères alphanumériques (135) de la chaîne de caractères alphanumériques (137) comprennent au moins une lettre et/ou au moins un chiffre, en particulier une lettre latine et/ou chinoise et/ou un chiffre arabe et/ou chinois.

13. Appareil d'entretien du linge (100) selon l'une des revendications précédentes 8 à 12, **caractérisé en ce que** les caractères alphanumériques (135) sont constitués respectivement d'au moins un segment lumineux périphérique (133-2) parmi une pluralité de segments lumineux périphériques (133-2), où les segments lumineux périphériques (133-2) délimitent un cadre du caractère alphanumérique (135), **en ce que** les caractères alphanumériques (135) sont constitués respectivement d'un segment lumineux central (133-3) qui est disposé au milieu du cadre, et **en ce que** les caractères alphanumériques (135) sont constitués respectivement d'au moins un segment lumineux symétrique (133-4) parmi une pluralité de segments lumineux symétriques (133-4), les segments lumineux symétriques (133-4) s'étendant en symétrie plane du segment lumineux central (133-3) aux segments lumineux périphériques (133-2).

14. Appareil d'entretien du linge (100) selon la revendication 13, **caractérisé en ce qu'**au moins deux des segments lumineux symétriques (133-4) s'étendent horizontalement et en symétrie plane du segment lumineux central (133-3) aux segments lumineux périphériques (133-2) et/ou **en ce qu'**au moins deux des segments lumineux symétriques (133-4) s'étendent verticalement et en symétrie plane du segment lumineux central (133-3) aux segments lumineux périphériques (133-2), et/ou **en ce qu'**au moins deux des segments lumineux symétriques (133-4) s'étendent diagonalement et en symétrie plane du segment lumineux central (133-3) aux segments lumineux périphériques (133-2).
